# EUROPEAN PATENT SPECIFICATION

(11) **EP 2 692 580 B1**
(45) Date of publication and mention of the grant of the patent: **03.04.2019**
(21) Application number: 12178851.7
(22) Date of filing: 01.08.2012
(51) Int. Cl.: B60P 1/02

(54) **Load handling apparatus for handling goods in vehicle**
Lasthandhabungsvorrichtung zur Handhabung von Waren in Fahrzeugen
Appareil de manipulation de charge pour manipuler des marchandises dans un véhicule

(43) Date of publication of application: 05.02.2014
(73) Proprietor: Middlegate Marketing Limited, Cupola Way, Off Normanby Road Scunthorpe, Lincolnshire DN15 9YJ (GB)
(72) Inventor: Dibdin, Thomas Peter, Scunthorpe, Lincolnshire, DN 15 9BY (GB)
(74) Representative: Vinsome, Rex Martin

(56) References cited:
- EP-A1- 1 518 750
- WO-A1-2011/154410
- GB-A- 2 299 791
- US-A- 3 061 358

## Description

The present invention relates to a load handling apparatus for handling goods in a vehicle, and relates particularly, but not exclusively, to a load handling apparatus for handling goods in a goods trailer. The invention also relates to a vehicle incorporating such load handling apparatus.

In order to maximise the carrying capacity of a goods trailer, it is known to lower the base of the trailer between its rear axle and front hitch in order to form a well in which additional goods can be stored.

WO 2004/071806 discloses a trailer of this type in which goods are stacked on a platform over the well, the platform initially forming part of the trailer floor, and then the platform and goods are lowered to the bottom of the well by means of a suitable lifting mechanism. Further goods are then stacked on top of the goods located in the well, by loading the further goods onto a platform at the rear of the trailer, which is then raised to an intended storage height and then moved forwards relative to the trailer along rails located in the walls of the trailer to locate the platform and the goods it supports on top of the goods in the well.

This arrangement suffers from the drawback that because the platform slides along rails located in the walls of the trailer, goods located on the platform can come into direct contact with the trailer walls. In the event that goods located on the platform in the transport position above the trailer well move during transport and come into contact with the sidewalls of the trailer, this causes the disadvantage that there is a risk of damage to the goods when the platform is moved rearwards in order to unload the goods from the platform.

WO2011/154410 describes a load handling apparatus in which first and second platforms are raised by an inflatable airbag device within a support slidably mounted on rails on the side walls of the trailer. The upper platform in its raised position engages and is supported by the internal walls of the support, and the support engaging the upper platform is moved forward on the rails on the internal surfaces of the side walls of the vehicle to locate goods supported on the platform above goods already located in the well of the vehicle.

GB 2299791 discloses an apparatus according to the preamble of claim 1.

Preferred embodiments of the present invention seek to further improve the load handling apparatus.

According to the present invention, there is provided a levelling apparatus for maintaining the orientation of a load supporting platform moveably mounted in a vehicle, the apparatus comprising:-
at least one pair of spaced apart first rack surfaces and at least one pair of spaced apart second rack surfaces mounted in use to one of the platform or the vehicle;
a respective first pinion gear adapted to engage each said first rack surface, wherein pairs of said first pinion gears are mounted in use to respective first axles mounted to the other of the platform or the vehicle; and
a respective second pinion gear adapted to engage each said second rack surface, wherein pairs of said second pinion gears are mounted in use to respective second axles mounted to the other of the platform or the vehicle;
wherein said first axles extend transversely to said second axles;
characterised in that a respective said first rack surface and a respective said second rack surface are provided on each of at least one pair of spaced apart rack members, wherein at least one said rack member comprises a respective body portion having a respective said first rack surface extending from said body portion and a respective said second rack surface extending from said body portion in a direction transverse to said first rack surface.

By providing at least one pair of spaced apart rack members mounted in use to one of the platform or the vehicle, wherein each said rack member comprises a respective first rack surface and a respective second rack surface, this provides the advantage of enabling one pair of axles to be made shorter than another pair of axles, thereby enabling the apparatus to be of more compact construction.

At least one pair of said second pinion gears may be arranged in use between end portions of a respective pair of said first axles.

This provides the advantage of further assisting compact construction of the apparatus.

The first and second pinion gears may be arranged on the vehicle and the rack members may be mounted to opposite sides of a platform mounted in use in the vehicle.

This provides the advantage of further assisting compact construction of the apparatus.

At least one pair of said first rack surfaces may be arranged between the corresponding said first pinion gears.

This provides the advantage of enabling a compact construction while assisting in maintaining the first rack surfaces and the first pinion gears in engagement with each other.

According to a further aspect of the present invention, there is provided a vehicle comprising a vehicle body, at least one load supporting platform moveably mounted inside the vehicle body, and at least one lifting apparatus as defined above.

A preferred embodiment of the invention will now be described, by way of example only and not in any limitative sense with reference to the accompanying drawings, in which:-
Figures 1 to 4 show schematic cross sectional side views of a loading sequence of a vehicle trailer of a first embodiment of the present invention;

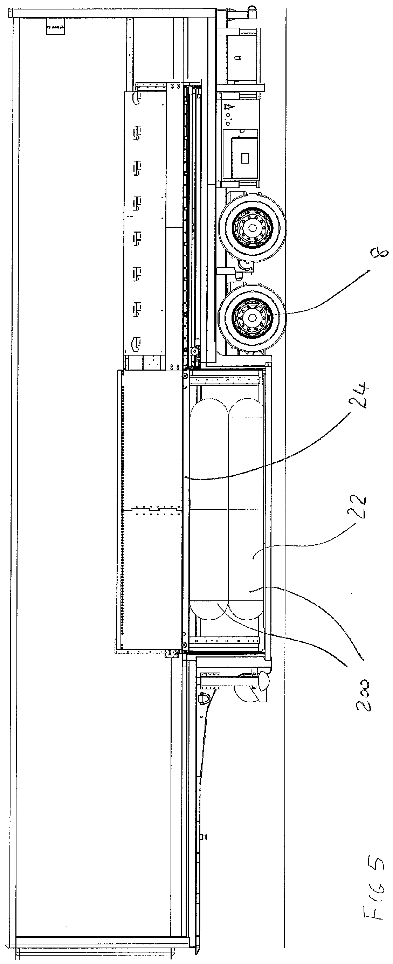

Figure 5 shows a detailed view of a first airbag lifting apparatus of Figures 1 to 4;

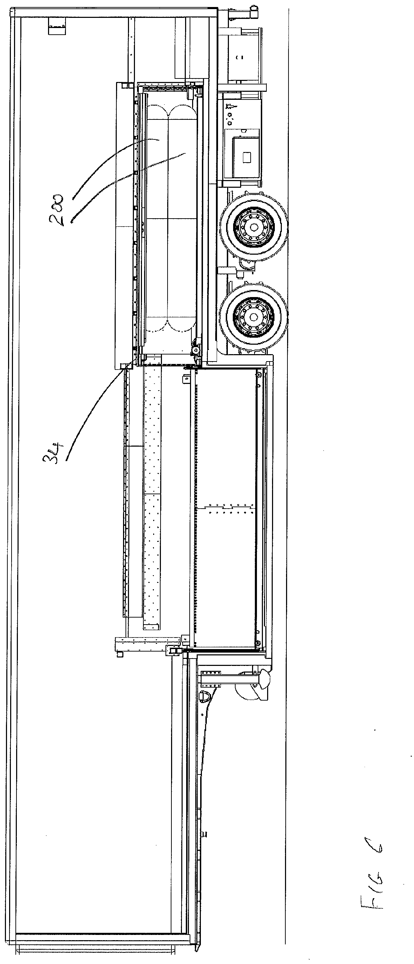

Figure 6 shows a detailed view of a second airbag lifting apparatus of Figures 1 to 4;
Figure 7 is a perspective view of an inflatable airbag member of the lifting apparatus of Figure 5 or 6;
Figure 8 is a partially cut-away perspective view of part of the trailer of Figures 1 to 4;
Figure 9 is a partially cut-away side view of the part of the trailer of Figure 8, showing an internal wall of a support;
Figure 10 is an end view of a drive mechanism and the support of Figure 9;
Figure 10A is a detailed cross sectional view of part of the support of figure 10;
Figure 11 is a perspective view of a well deck of the trailer of Figures 1 to 4 together with a levelling apparatus for use therewith;
Figure 12 is a perspective view of a rear deck assembly of the trailer of Figures 1 to 4 together with a levelling apparatus for use therewith;
Figure 13 is a side view of the rear deck assembly of Figure 12;
Figure 14 is a partially cutaway view of an internal wall of the vehicle of Figure 1 with the support in the rear position thereof;
Figure 15 is a view corresponding to Figure 14 with the support in the forward position thereof;
Figure 16 is a detailed view of a forward part of the levelling mechanism of Figure 12; and
Figures 17 and 18 show an unloading sequence of the trailer of Figures 1 to 4.

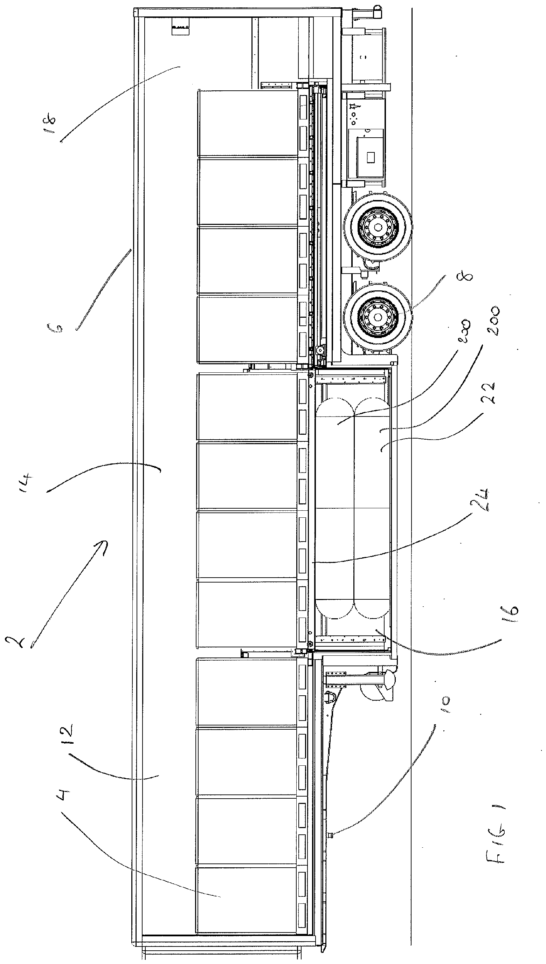

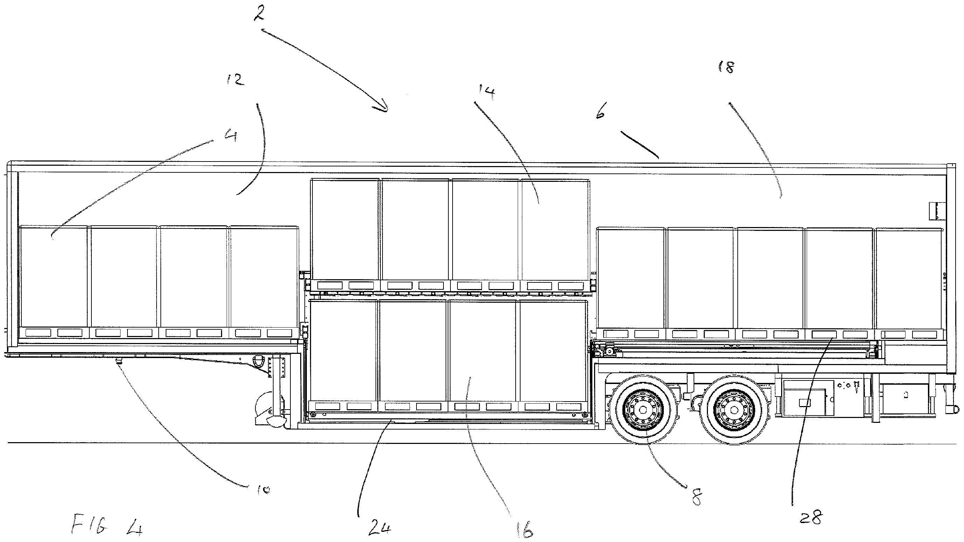

Referring to Figures 1 to 4, a goods trailer 2 of a first embodiment of the present invention for supporting goods on pallets 4 includes a trailer body 6 having rear axles 8 and a front hitch 10. The internal space of the trailer 2 is divided into a front compartment 12, a middle compartment 14 having a goods well 16 between the rear axles 8 and the front hitch 10, and a rear compartment 18.

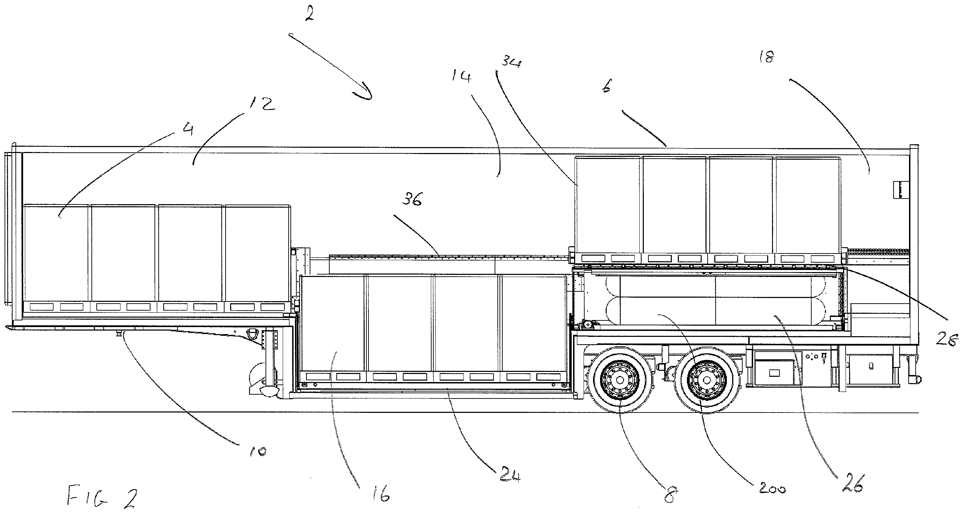

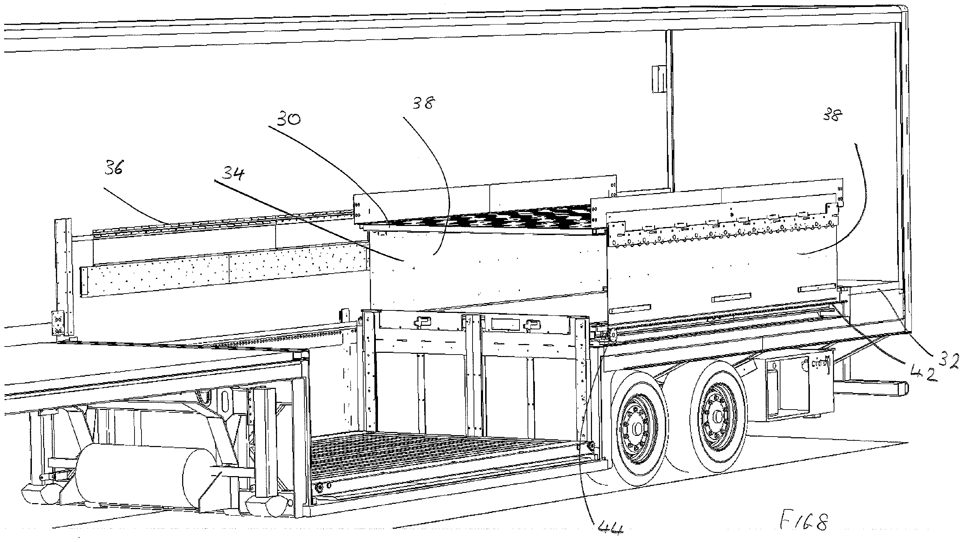

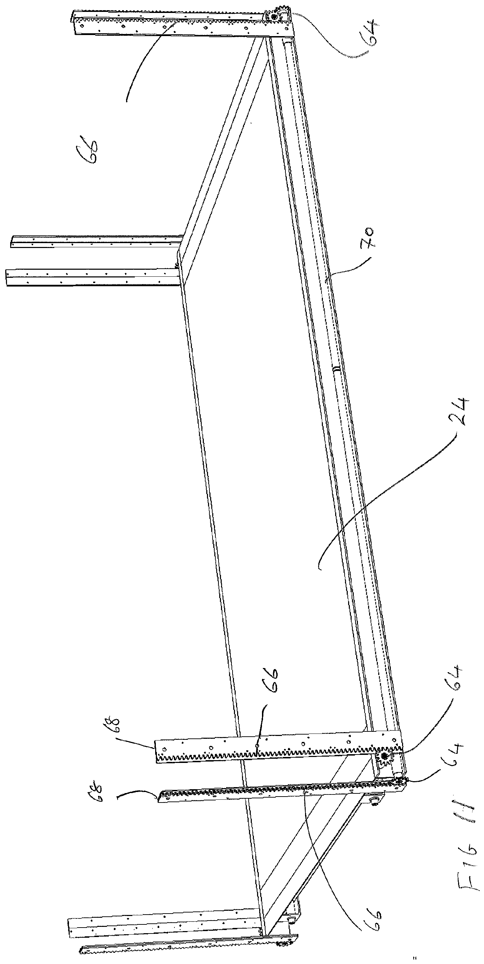

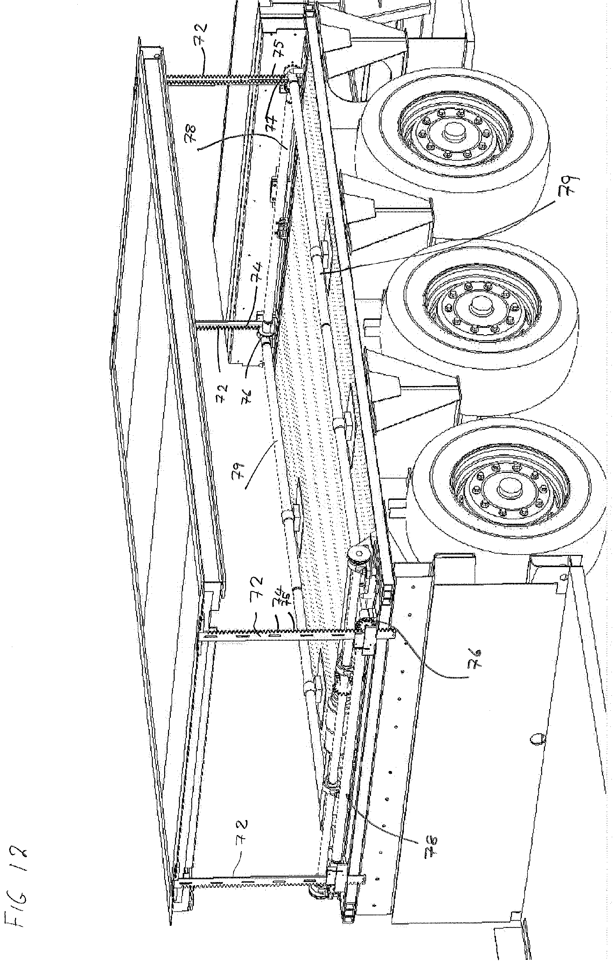

A first inflatable airbag lifting apparatus 22 is located in the goods well 16 for raising and lowering a well deck 24 (shown in greater detail in Figure 11) forming a floor of the middle compartment 14, and a second airbag apparatus 26 (Figure 2) is located below a rear deck assembly 28 (shown in greater detail in Figure 12), comprising a first platform 30 and a second platform 32 (Figure 8). The second airbag apparatus 26 raises and lowers the first 30 and second 32 platforms within a support 34 slidably mounted to support rails 36 on the side walls of the trailer 2.

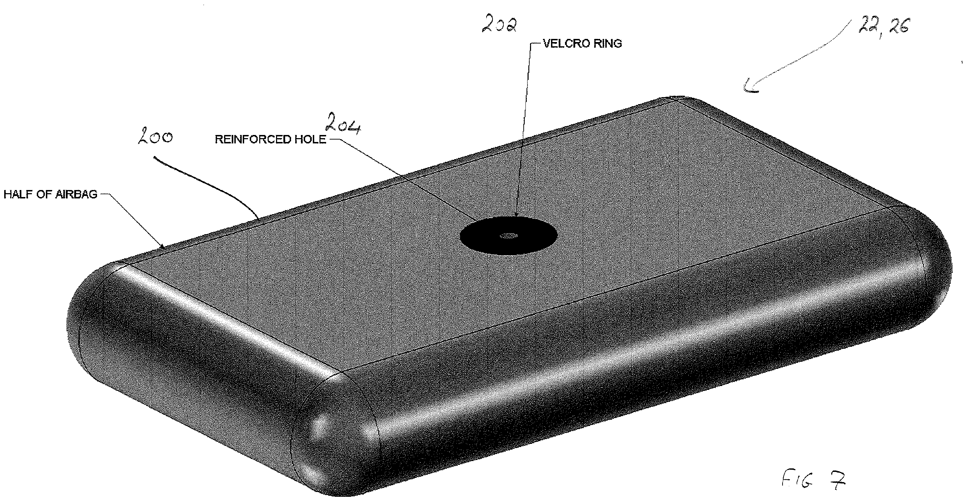

The first 22 and second 26 airbag lifting apparatus each comprise a pair of substantially flat inflatable airbag members 200 forming a pair of interconnected inflatable chambers. As shown in greater detail in Figure 7, the airbag members 200 are releasably connected to each other by means of a hook and loop type fastener 202 surrounding a reinforced connecting aperture 204, such that when a force tending to separate the airbag members 200 reaches a critical level, controlled separation of the airbag members 200 occurs. By forming a pair of interconnected chambers, the upper and lower surface areas of the airbag lifting apparatus 22, 26 are increased, as a result of which the force required to lift the respective deck 24 and platforms 30,32 can be generated at lower air pressure. This improves the safety of operation of the apparatus.

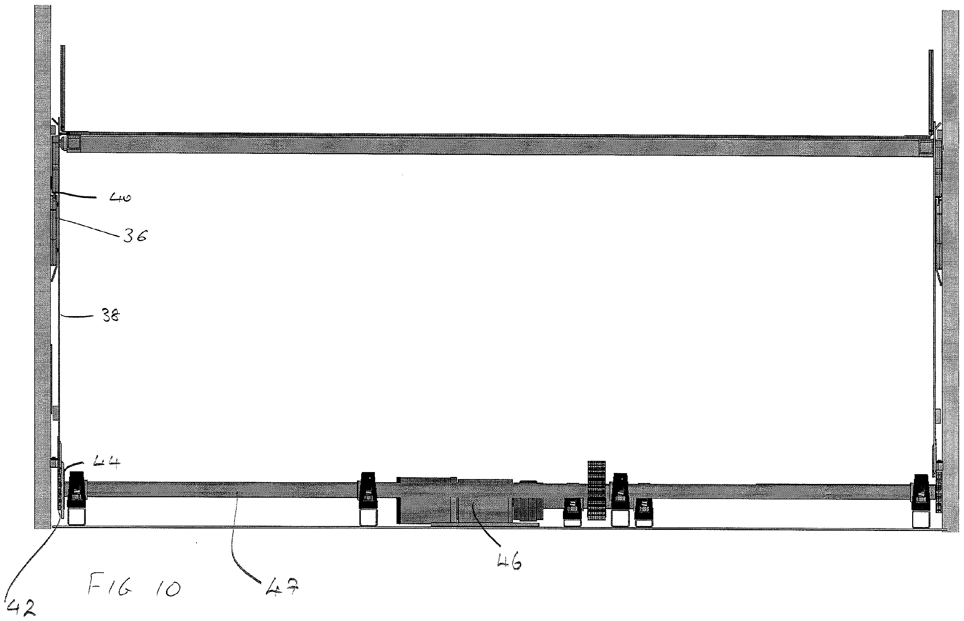

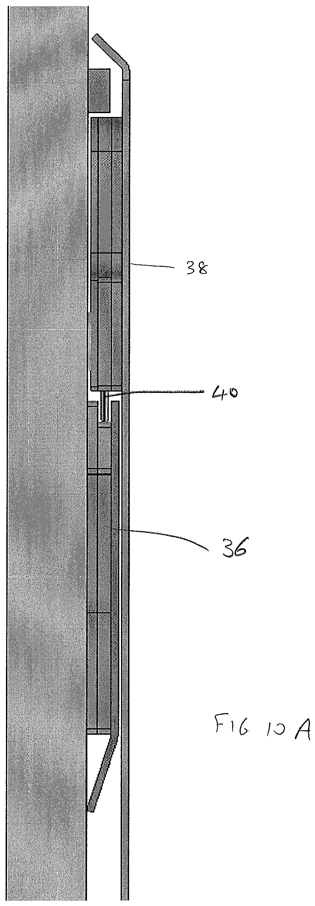

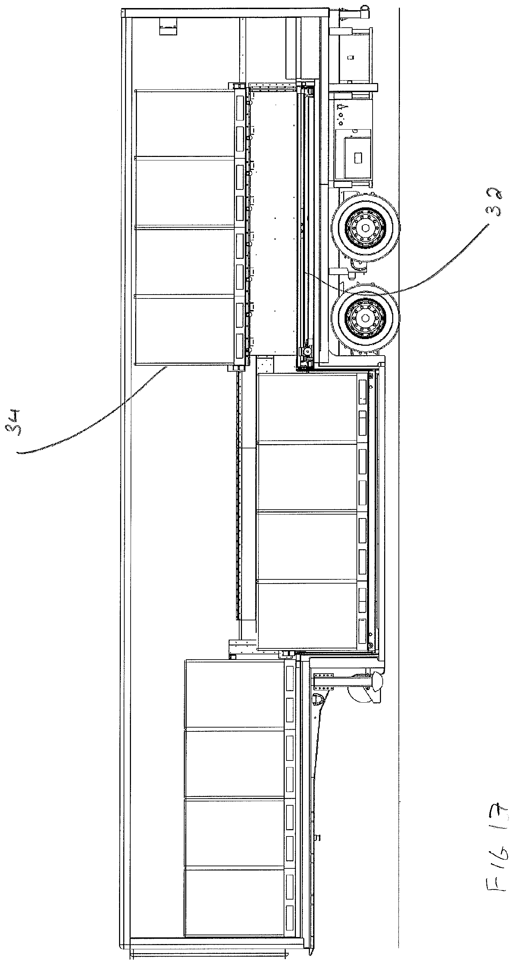

Referring to Figure 8, the support 34 has internal walls 38) and is slidably mounted on the tracks 36 on the internal surface of the side walls of the vehicle 2 by means of suitable rollers 40 (Figure 10A). As shown in greater detail in Figure 10, the lower edge of each internal wall 38 of the support is provided with a rack 42 which engages with corresponding pinion gears 44, which are mounted on a common shaft 47 for common rotation, such that rotation of one pinion gear 44 produces an equal amount of rotation in the other pinion gear 44. This ensures that both internal wall 38 of the support 34 are driven at the same speed thus avoiding so-called "crabbing",. The pinion gears 44 are driven by means of a drive motor 46 through a drive shaft and gear train 50. (Figure 17)

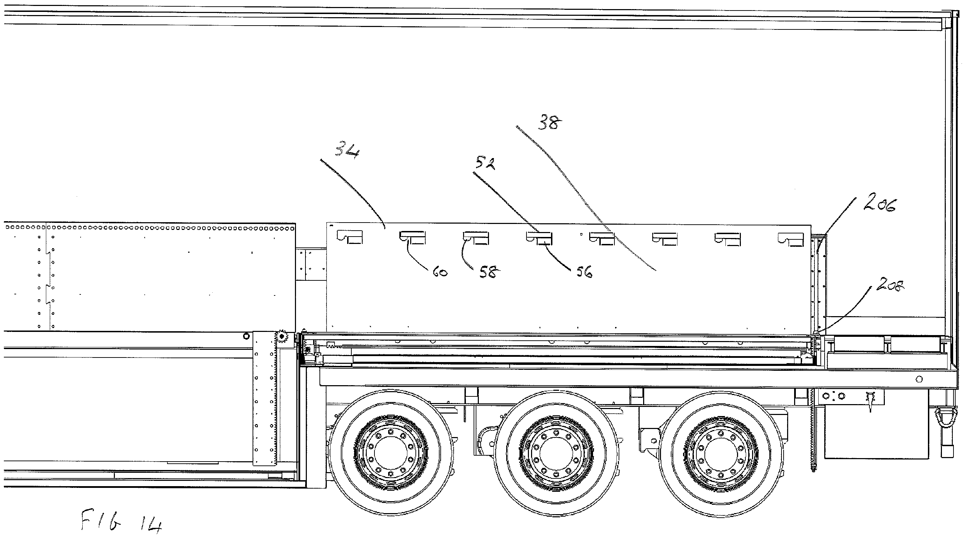

Referring to Figure 14, each internal wall 38 of the support 34 is provided with first engaging means in the form of a row of recessed plates 52 for receiving corresponding spring loaded pins (not shown) protruding from side edges of the upper deck 30 of rear deck assembly 28. The recessed plates 52 are provided with respective recesses having inclined surfaces 56 for engaging an end of respective spring loaded pins such that as the upper platform 30 is moved upwards relative to the support 34, the pins can move outwards of the upper platform 30, and slight rearward movement of the support 34 relative to the platform 30 enables the pins 54 to be located in portions 58 of the recesses behind respective protrusions 60 in the plates 52 to prevent disengagement of the pins from the plates 52 unless the upper platform 30 is lifted relative to the plates 52 and the support 34 moved forwards relative to the upper platform 30.

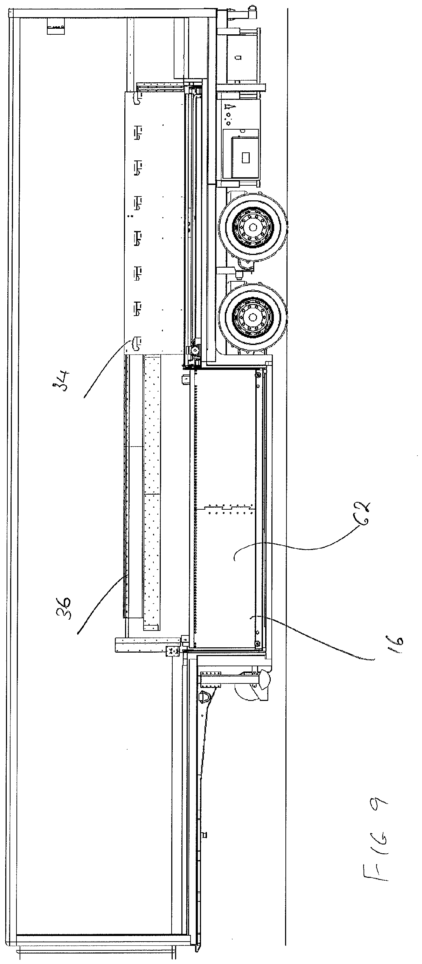

Referring to Figures 8, 9 and 11, the goods well 16 located between the rear axles 8 and front hitch 10 is provided with side plates 62 for preventing goods supported on the well deck 24 in its lowered position (Figures 2 to 4) from coming into contact with the side walls of the vehicle 2. This in turn minimises the risk of damage to goods on the well deck 24 when the well deck 24 is raised to unload it. The well deck 24 is provided with pairs of pinion gears 64 (Figure 11) located at each of its edges and which engage opposite rack surfaces 66 on respective edges of racks 68 mounted in the well 16, the pinion gears 64 being arranged in pairs on opposite ends of respective common axles 70, so that movement of one pinion gear 64 along the corresponding rack 68 causes equal rotation of the corresponding coaxial pinion gear 64, as a result of which movement of one side of the well deck 24 along the corresponding rack 68 causes equal movement of the other side of the well deck 24 along the oppositely arranged rack 68 to maintain the well deck 24 in a horizontal orientation.

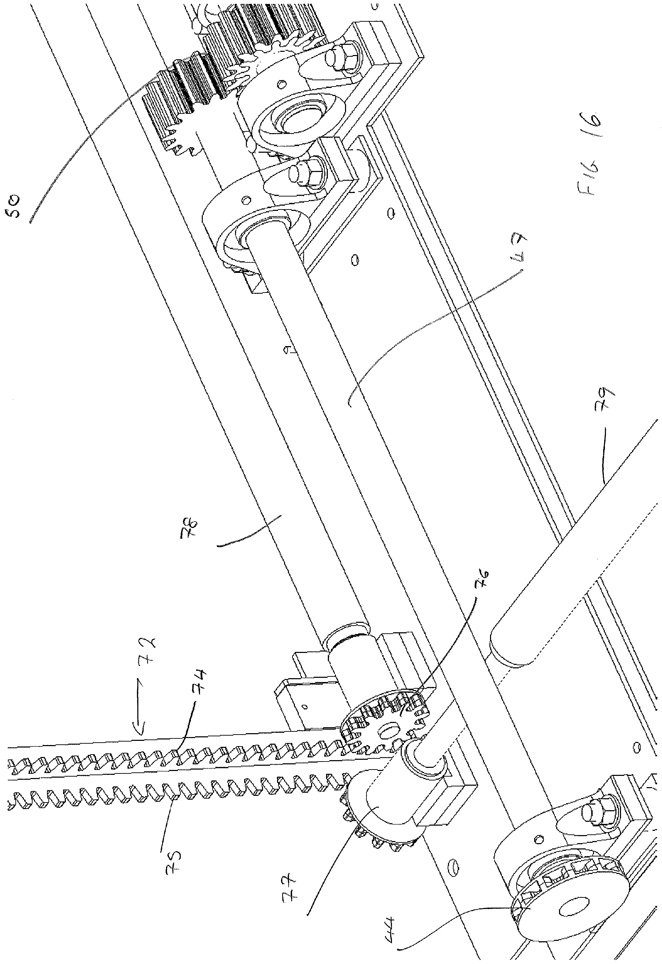

Similarly, referring to Figure 12, and as shown in greater detail in Figure 16, pairs of racks 72 extend from front and rear ends of the lower platform 32 of the rear deck assembly 28. Each rack 72 has a first rack surface 74 engaged by pairs of pinion gears 76 arranged in pairs on opposite ends of respective common axles 78 which are fixed relative to the vehicle 2. The pinion gears 76 are mounted for common rotation so that rotation of one pinion gear 76 causes an equal amount of rotation of the corresponding coaxial pinion gear 76, so that movement of the front edge of the lower platform 32 along one rack 72 causes an equal amount of movement of the other end of the lower platform 32 along the corresponding rack 72. Each rack 72 also has a second rack surface 75 engaged by pairs of pinion gears 77 arranged in pairs on opposite ends of respective common axles 79 which are fixed relative to the vehicle 2. The pinion gears 77 are mounted for common rotation so that rotation of one pinion gear 77 causes an equal amount of rotation of the corresponding coaxial pinion gear 77, so that movement of one side edge of the lower platform 32 along one rack 72 causes an equal amount of movement of the other side edge of the lower platform 32 along the corresponding rack 72.

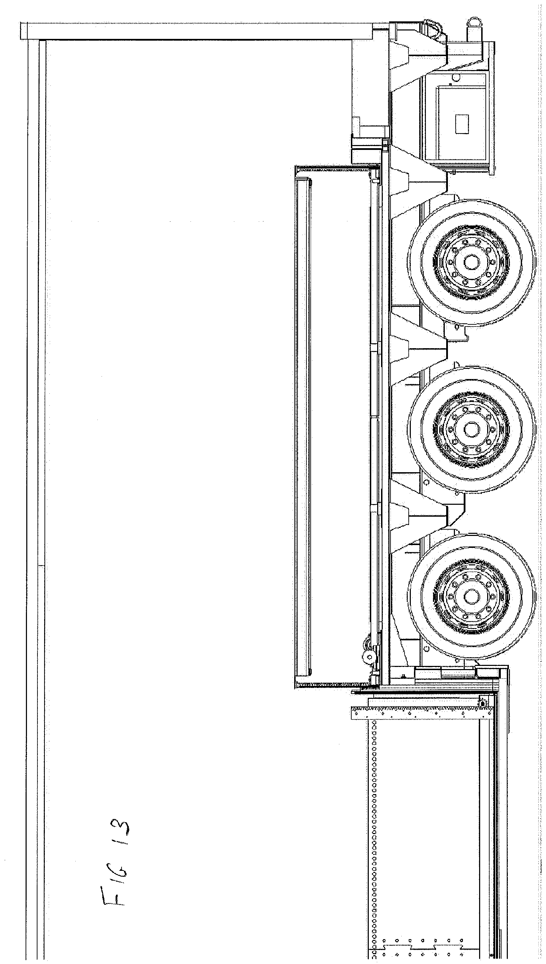

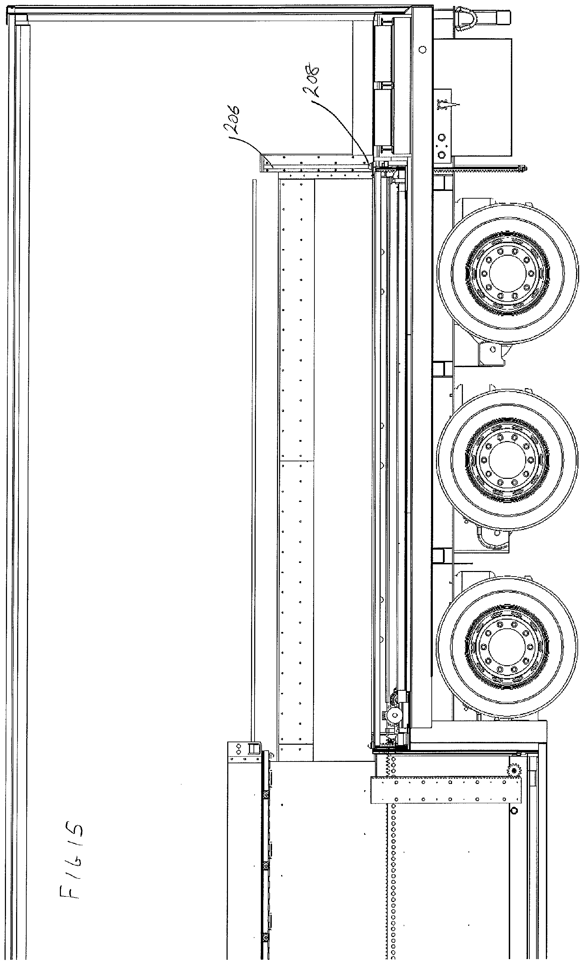

Referring to Figures 13 to 15, a vertical channel 206 having a widened lower end 208 is provided in each internal wall of the vehicle. Each channel 206 receives a springloaded pin (not shown) protruding from the sides of the second 32 platform to restrain movement of the platform 32 in the forward or rearward direction as the platforms 30,32 are raised relative to the support 34, which in turn minimises bending of the racks 72 (Figure 16). The pins are moved between their retracted and protruded positions by means of an inclined surface located in the widened lower end 208 of each channel 206. In this way, the second 32 platforms is prevented from moving in the forward or rearward direction.

Referring now to Figures 1 to 4, a loading operation of the vehicle 2 will now be described.

In order to begin the loading process, the first airbag apparatus 22 is inflated under the control of a suitable controller (not shown) to lift the well deck 24 to a position in which it forms part of the floor of the vehicle 2. Goods on pallets 4 are then loaded into the front compartment 12. Goods are then loaded into the middle compartment 14 and stacked on the upper platform 30 of the rear deck assembly 28, i.e. between the internal walls 38 of the support 34 to give the arrangement shown in Figure 1.

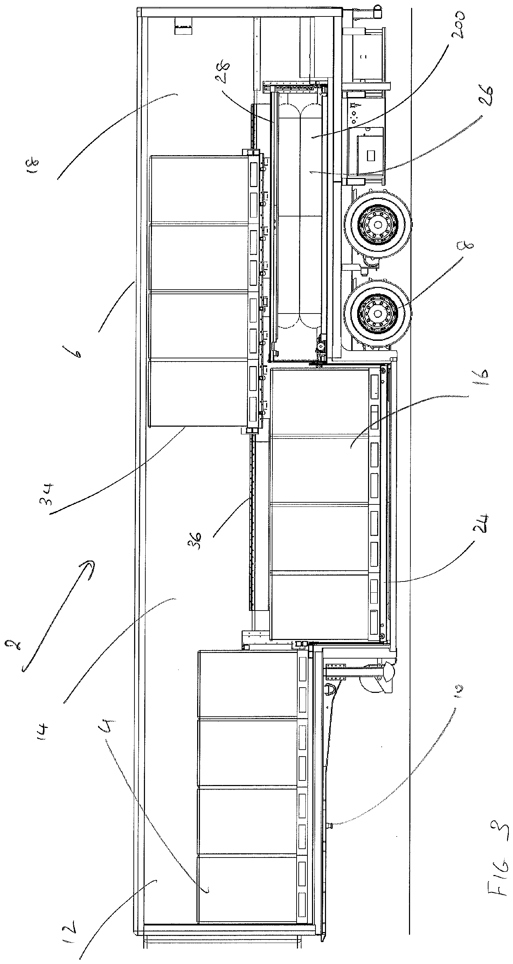

Referring now to Figure 2, the first airbag apparatus 22 is deflated to lower the well deck 24 to the bottom of the well 16, and the second airbag apparatus 26 is inflated to raise both platforms 30, 32 of the rear deck assembly 28 so that the pins in the upper platform 30 of the rear deck assembly 28 engage the recesses in the recessed plates 52 in the inner side walls 38 of the support 34. The support 34 is then moved a small amount in the rearward direction relative to the vehicle, to cause the pins to engage the portions 58 of the recesses behind the abutments 60. Referring now to Figure 3, the rear airbag apparatus 26 is then deflated, as a result of which the upper platform 30 is held in position in the sidewalls 38 of the support 34, but the lower platform 32 returns to floor level. The support 34 is then moved forwards on the rails 36 in the internal surface of the sidewalls of the vehicle 2 by means of the rack and pinion gear arrangement 46, 48, 50 so that the support 34 together with its pallets 4 of goods is moved to a transport position above the goods in the well 16, and the remaining pallets 4 are then loaded onto the lower platform 32 of the rear deck assembly 28 and the rear doors of the trailer 2 closed for transport.

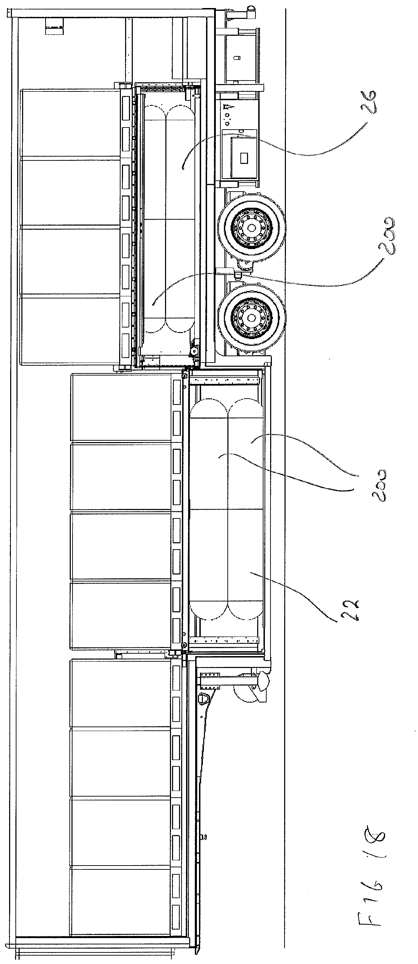

Referring now to Figures 17 and 18, in order to unload goods from the trailer 2, the sequence described with reference to Figures 1 to 4 is reversed. In particular, the pallets 4 are unloaded from the lower platform 32 of the rear deck assembly 28, and the support 34 moved rearwardly relative to the vehicle 2 to provide the arrangement shown in Figure 17. The first 22 and second 26 airbag apparatus are then inflated to raise the well deck 24 and lower platform 32 of the rear deck assembly 28 respectively. This causes the upper platform 30 of the rear deck assembly 28 to be lifted out of engagement with the recesses of the recessed plates 52 of the support 34, and the support 34 is then moved forward slightly relative to the upper platform 30. Referring now to Figure 1, the second airbag apparatus 26 is then deflated, as a result of which the sprung pins on the upper platform 30 of the rear deck assembly 28 slide over the corresponding inclined surfaces 56 in recessed plates 52 to disengage from the support 34 to enable both platforms 30, 32 of the rear deck assembly 28 to be lowered. The remaining pallets 4 located in the trailer can then be removed.

It will be appreciated by persons skilled in the art that the above embodiment has been described by way of example only, and not in any limitative sense, and that various alterations and modifications are possible without departure from the scope of the invention as defined by the appended claims.

## Claims

1. A levelling apparatus for maintaining the orientation of a load supporting platform moveably mounted in a vehicle, the apparatus comprising:-
at least one pair of spaced apart first rack surfaces (74) and at least one pair of spaced apart second rack surfaces (75) mounted in use to one of the platform or the vehicle;
a respective first pinion gear (76) adapted to engage each said first rack surface, wherein pairs of said first pinion gears are mounted in use to respective first axles (78) mounted to the other of the platform or the vehicle; and
a respective second pinion gear (77) adapted to engage each said second rack surface, wherein pairs of said second pinion gears are mounted in use to respective second axles (79) mounted to the other of the platform or the vehicle;
wherein said first axles extend transversely to said second axles;
**characterised in that** a respective said first rack surface and a respective said second rack surface are provided on each of at least one pair of spaced apart rack members (72), wherein at least one said rack member comprises a respective body portion having a respective said first rack surface extending from said body portion and a respective said second rack surface extending from said body portion in a direction transverse to said first rack surface.

2. An apparatus according to claim 1, wherein at least one pair of said second pinion gears is arranged in use between end portions of a respective pair of said first axles.

3. An apparatus according to any one of the preceding claims, wherein the first and second pinion gears are arranged on the vehicle and the rack members are mounted to opposite sides of a platform mounted in use in the vehicle.

4. An apparatus according to any one of the preceding claims, wherein at least one pair of said first rack surfaces is arranged between the corresponding said first pinion gears.

5. A vehicle comprising a vehicle body, at least one load supporting platform (32) moveably mounted inside the vehicle body, and at least one levelling apparatus according to any one of the preceding claims.

## Patentansprüche

1. Eine Nivellierungsvorrichtung zur Beibehaltung der Orientierung einer lasttragenden Plattform, die in einem Fahrzeug beweglich gelagert ist, wobei die Vorrichtung umfasst:
mindestens ein Paar von getrennt angeordneten ersten Schienenoberflächen (74) und mindestens ein Paar von getrennt angeordneten zweiten Schienenoberflächen (75), welche in Benutzung an einem von der Plattform oder dem Fahrzeug befestigt sind;
jeweils ein erstes Zahnrad (76), welches dazu eingerichtet ist, um in jede der besagten ersten Schienenoberflächen einzugreifen, wobei Paare von besagten ersten Zahnrädern in Benutzung an entsprechenden ersten Achsen (78) befestigt sind, welche an dem anderen von der Plattform oder dem Fahrzeug befestigt sind; und
jeweils ein zweites Zahnrad (77), welches dazu eingerichtet ist, um in jede der besagten zweiten Schienenoberflächen einzugreifen, wobei Paare von besagten zweiten Zahnrädern in Benutzung an entsprechenden zweiten Achsen (79) befestigt sind, welche an dem anderen von der Plattform oder dem Fahrzeug befestigt sind;
wobei besagte erste Achsen sich transversal zu den besagten zweiten Achsen erstrecken;
**dadurch gekennzeichnet, dass** eine jeweilige besagte erste Schienenoberfläche und eine jeweilige besagte zweite Schienenoberfläche an jedem von mindestens einem Paar von getrennt angeordneten Schienenelementen (72) bereitgestellt werden, wobei mindestens ein besagtes Schienenelement einen entsprechenden Körperabschnitt umfasst, welcher eine entsprechende besagte erste Schienenoberfläche, welche sich von dem besagten Körperabschnitt weg erstreckt, und eine entsprechende besagte zweite Schienenoberfläche, welche sich von dem besagten Körperanteil in eine Richtung transversal zu der besagten ersten Schienenoberfläche erstreckt, hat.

2. Eine Vorrichtung nach Anspruch 1, wobei mindestens ein Paar von besagten zweiten Zahnrädern in Benutzung zwischen Endabschnitten von einem entsprechenden Paar von besagten ersten Achsen angeordnet ist.

3. Eine Vorrichtung nach einem der vorstehenden Ansprüche, wobei die ersten und zweiten Zahnräder an dem Fahrzeug angeordnet sind, und die Schienenelemente an gegenüber liegenden Seiten der Plattform befestigt sind, die in Benutzung in dem Fahrzeug befestigt ist.

4. Eine Vorrichtung nach einem der vorstehenden Ansprüche, wobei mindestens ein Paar von besagten ersten Schienenoberflächen zwischen den zugehörigen besagten ersten Zahnrädern angeordnet ist.

5. Ein Fahrzeug umfassend einen Fahrzeugkörper, mindestens eine lasttragende Plattform (32), welche beweglich innerhalb des Fahrzeugkörpers befestigt ist, und mindestens eine Nivellierungsvorrichtung nach einem der vorstehenden Ansprüche.

## Revendications

1. Appareil de nivellement pour maintenir l'orientation d'une plateforme de support de charge montée de façon mobile dans un véhicule, l'appareil comprenant :
au moins une paire de premières surfaces de crémaillère espacées (74) et au moins une paire de deuxièmes surfaces de crémaillère espacées (75) montées en utilisation sur l'un(e) de la plateforme ou du véhicule ;
un premier engrenage à pignons respectif (76) adapté pour venir en prise avec chacune desdites premières surfaces de crémaillère, où des paires desdits premiers engrenages à pignons sont montées en utilisation sur des premiers axes respectifs (78) montés sur l'autre de la plateforme ou du véhicule ; et
un deuxième engrenage à pignons respectif (77) adapté pour venir en prise avec chacune desdites deuxièmes surfaces de crémaillère, où des paires desdits deuxièmes engrenages à pignons sont montées en utilisation sur des deuxièmes axes respectifs (79) montés sur l'autre de la plateforme ou du véhicule ;
où lesdits premiers axes s'étendent transversalement auxdits deuxièmes axes ;
**caractérisé en ce qu'**une dite première surface de crémaillère respective et une dite deuxième surface de crémaillère respective sont prévues sur chacun d'au moins une paire d'éléments de crémaillère espacés (72), où au moins l'un desdits éléments de crémaillère comprend une partie de corps respective ayant une surface respective desdites premières surfaces de crémaillère s'étendant à partir de ladite partie de corps et une surface respective desdites deuxièmes surfaces de crémaillère s'étendant à partir de ladite partie de corps dans une direction transversale à ladite première surface de crémaillère.

2. Appareil selon la revendication 1, dans lequel au moins une paire desdits deuxièmes engrenages à pignons est agencée en utilisation entre des parties d'extrémité d'une paire respective desdits premiers axes.

3. Appareil selon l'une quelconque des revendications précédentes, dans lequel les premier et deuxième engrenages à pignons sont agencés sur le véhicule et les éléments de crémaillère sont montés sur des côtés opposés d'une plateforme montée en utilisation dans le véhicule.

4. Appareil selon l'une quelconque des revendications précédentes, dans lequel au moins une paire desdites premières surfaces de crémaillère est agencée entre lesdits premiers engrenages à pignons correspondants.

5. Véhicule comprenant une carrosserie de véhicule, au moins une plateforme de support de charge (32) montée de façon mobile à l'intérieur de la carrosserie de véhicule, et au moins un appareil de nivellement selon l'une quelconque des revendications précédentes.
